# EUROPÄISCHE PATENTSCHRIFT

(11) **EP 2 707 243 B1**
(45) Veröffentlichungstag und Bekanntmachung des Hinweises auf die Patenterteilung: **14.03.2018**
(21) Anmeldenummer: 12726366.3
(22) Anmeldetag: 11.05.2012
(51) Int. Cl.: H02J 7/34, B60L 7/18

(54) **VERFAHREN ZUR NUTZUNG VON REKUPERATIONSLEISTUNG**
METHOD FOR USING RECUPERATION POWER
PROCÉDÉ D'UTILISATION D'ÉNERGIE DE RÉCUPÉRATION

(30) Priorität: 13.05.2011 DE 102011075782
(43) Veröffentlichungstag der Anmeldung: 19.03.2014
(73) Patentinhaber: Voith Patent GmbH, 89522 Heidenheim (DE)
(72) Erfinder: GOEPFERT, Ronny, 09569 Oederan (DE); VOGEL, Volkmar, 09405 Gornau (DE)
(86) Internationale Anmeldenummer: PCT/EP2012/058731
(87) Internationale Veröffentlichungsnummer: WO 2012/156291

(56) Entgegenhaltungen:
- DE-A1-102007 026 164
- DE-A1-102009 000 222
- DE-A1-102009 027 931

## Beschreibung

Die Erfindung betrifft ein Verfahren zur Nutzung von Rekuperationsleistung eines Bordnetzes in einem Kraftfahrzeug, wobei das Bordnetz einen Generator, der von einer Antriebseinheit angetrieben wird, eine Batterie, eine erste Steuereinheit und mehrere angeschlossene Verbraucher umfasst, wobei der Generator mittels der ersten Steuereinheit derart geregelt wird, dass der Ladestatus der Batterie innerhalb vorgebbarer Grenzen und die Bordnetzspannung weitgehend konstant gehalten wird.

Es ist allgemein bekannt, dass zur Reduzierung der Emissionen bei Verbrennungskraftmaschinen sehr viele verschiedene Wege beschrieben werden. Rund ein Drittel der zum Fahrzeugvortrieb benötigten Energie wird bei einem Mittelklassefahrzeug über die Radbremsen in Form von Wärmeenergie vernichtet. Eine Bremsenergierückgewinnung mit dem Ziel der Unterstützung des Fahrzeugvortriebs wird jedoch nicht allein wegen der Speicherplatz- und Regelprobleme als kritisch beurteilt.

Nachteilig an derartigen Systemen sind die hohen Kosten für die notwendigen Systeme, die eine Gewichtszunahme und Raumbedarf, für den Einbau der zusätzlichen Komponenten, zur Folge haben.

In einem Kraftfahrzeug stellt der mechanisch an den Verbrennungsmotor gekoppelte Generator bei laufendem Motor eine definierte Spannung, deren Höhe herstellerseitig auf einen Wert knapp unterhalb der Gasungsspannung der Batterie eingestellt ist, bereit. Diese Spannung wird durch Feldregelung des Generators in weiten Bereichen unabhängig von Motordrehzahl und elektrischer Belastung konstant gehalten.

Die konventionelle Auslegung des Generators erfolgt in der Regel in derart, dass bereits bei Leerlaufdrehzahl des Motors der Betrieb aller wesentlichen Verbraucher möglich ist und zusätzlich die Batterie geladen wird.

Diese Auslegung des Generators bietet daher, zumindest bei allen Betriebszuständen oberhalb der Leerlaufdrehzahl, Leistungsreserven.

Zur Nutzung dieser Leistungsreserven sind aus dem Stand der Technik mehrere Regelungen bekannt.

So ist aus der DE 197 49 548 A1 ein Verfahren bekannt, das auf der teilweisen Nutzung der Bremsenergie eines Kraftfahrzeuges mit dem Ziel der Unterstützung des Fahrzeugvortriebs beruht. So ist vorgesehen, dass während des Betriebs in einer ersten Betriebsbedingung des Kraftfahrzeuges der elektrische Energiespeicher oder Kondensator über den Stromgenerator aufgeladen wird und dass während einer zweiten Betriebsbedingung der Energiespeicher oder Kondensator mindestens 2 % für insgesamt mindestens 2 Sekunden der Generatorleistung zum Betreiben der elektrischen Verbraucher und zum Laden des Akkumulators substituiert, so dass bei der ersten Betriebsbedingung der Generator gegenüber der zweiten Betriebsbedingung einen niedrigeren theoretischen spezifischen Kraftstoffverbrauch hat.

In der DE 10 2006 001 201 A1 wird ein Verfahren zur Steuerung eines Batterieladungsvorgangs offenbart. Es wird vorgeschlagen, dass die während einer Rekuperationsphase fliessende Ladungsmenge zur Batterie an eine oder mehrere der vorhergehenden Rekuperationsphasen angepasst wird, indem der SOC-Soll-Level an den geflossenen Ladestrom angepasst wird.

Aus DE 102009027931 A1 ist ein Verfahren zur Nutzung von Rekuperationsleistung in einem Kraftfahrzeug bekannt. Mit einer einzigen, kompakten Steuervorrichtung, die mehrere funktionale Gruppen ansteuert u.a. auch einen Leistungsspeicher, der parallel zur Batterie geschaltet ist, wird erreicht, dass Material- und Bauteilaufwand reduziert werden können.

Auch aus DE 102009000222 ein Bordnetz mit einer Batterie und einem zweiten, parallel dazu geschalteten Energiespeicher bekannt. Die eine Steuereinheit regelt die Be- und Entladevorgänge sowohl für die Batterie wie auch für den zweiten Energiespeicher durch Ausgabe eines Rekuperationssignals und in Abhängigkeit von der Reservekapazität der Batterie.

Effiziente Bremsenergierückgewinnung erfordert exakte Kenntnis bzgl. des aktuellen Fahrzustandes des Fahrzeuges. Bekannte Lösungen nutzen hierfür interne Fahrzeugsignale wie bspw. Bremslichtschalter oder Fahrpedalgeber zum eindeutigen Detektieren eines Bremsvorganges / Verzögerungswunsches des Fahrers.

Alle bekannten Lösungen verfolgen im Wesentlichen einen Ansatz, der die Entwicklungshoheit bzgl. der Kraftfahrzeuge voraussetzt und in die Bordnetzarchitekturen und Konstruktionen eingreift. Kraftfahrzeuge im Sinne der Erfindung sind PKW's, LKW's wie auch andere Nutzkraftfahrzeuge.

Aufgabe der Erfindung ist es, ein Verfahren und eine Speichereinheit zur Nutzung von Rekuperationsleistung bereitzustellen, das/die die Nutzung von Rekuperationsleistung vereinfacht und eine einfache Kraftfahrzeugumrüstung ermöglicht.

Die Aufgabe wird durch die Merkmale des Verfahrens nach Anspruch 1 und einer Speichereinheit nach Anspruch 8 gelöst.

Erfindungsgemäß wird ein Verfahren zur Nutzung von Rekuperationsleistung vorgeschlagen, bei dem das bekannte Generatorsteuerverfahren unverändert weiter genutzt wird und bei dem eine zweite Steuereinheit und eine parallel zur Batterie geschaltete Energiespeichereinheit vorhanden ist, wobei mittels der zweiten Steuereinheit die Bordspannung derart beeinflusst wird, dass überschüssige Rekuperationsleistung in der Energiespeichereinheit gespeichert und bei Bedarf aus dieser wieder ins Bordnetz abgegeben wird, wobei die zweite Steuereinheit dabei unabhängig von der ersten Steuereinheit, der Kraftfahrzeugsteuereinheit, arbeitet und die Energiespeichereinheit als semiaktive Last in das Bordnetz zuschaltet.

Vorzugsweise wird die Bordspannung durch gezieltes Modulieren der Klemmenspannung der Energiespeichereinheit durch die Steuereinheit geregelt. So wird erreicht, dass die Energiespeichereinheit für den Bremsvorgang als Stromsenke und für den Beschleunigungsvorgang sowie für die gleichförmige Fahrt als Stromquelle agiert. So wird eine Kraftstoffeinsparung erreicht und/oder das Beschleunigungsvermögen verbessert und/oder die Bremsanlage der Fahrzeuge entlastet.

Des Weiteren umfasst die zweite Steuereinheit vorzugsweise eine Steuerlogik, die ein virtuelles Abbild der Fahrsituation erzeugt, indem statische und dynamische Beschleunigungssignale gefiltert und bewertet werden und diese Daten den Speicherlade- und Entladevorgang steuern.

Vorzugweise erfasst die zweite Steuereinheit die Beschleunigungen des Fahrzeuges mittels Beschleunigungssensoren, wertet die Lage im Raum und die dynamischen Fahrzeugbeschleunigungswerte in Echtzeit aus. Mittels Hochpass-, Tiefpass- und Bandpassfilter sowie Plausibilitätsvergleich kann in der zweiten Steuereinheit daraus die Fahrsituation bewertet werden.

Die Steuerlogik kann ein selbst lernendes System sein. Zudem kann die zweite Steuereinheit Mittel umfassen die es ermöglichen mit der ersten Steuereinheit Informationen auszutauschen und /oder dem Fahrer anzuzeigen.

Der erfindunsgemäße Energiespeicher umfasst eine zweite Steuereinheit und eine parallel zur Batterie geschaltete Energiespeichereinheit, wobei mittels der zweiten Steuereinheit die Bordspannung derart beeinflussbar ist, dass überschüssige Rekuperationsleistung in der Energiespeichereinheit speicherbar ist und bei Bedarf aus dieser wieder ins Bordnetz abgebbar ist.

Vorzugsweise bilden die zweite Steuereinheit und die Energiespeichereinheit eine Einheit, die über einen zweipoligen Anschluss an einer beliebigen Stelle in das Bordnetz geschaltet werden kann, wobei die Einheit weiterhin vorzugsweise unmittelbar, bzw. elektrisch dicht, an den Batterieanschlüssen angeschlossen ist.

In einer vorteilhaften Ausführung ist die Energiespeichereinheit ein Kondensator- oder SuperCapspeicher, deren Innenwiderstand um mindestens eine Größenordnung kleiner ist als der Innenwiderstand der Batterie.

Die Energiespeichereinheit sollte eine Leistung von 5 - 200 Wh haben.

Des Weiteren umfasst die zweite Steuereinheit einen Beschleunigungssensor und eine Steuerlogik, wobei der Beschleunigungssensor ein Ein- oder Mehrlagenbeschleunigungssensor sein kann.

Die Erfindung betrifft des Weiteren Kraftfahrzeuge umfassend einen Energiespeicher zur Nutzung von Rekuperationsleistung mit den oben angeführten Merkmalen.

Vorteile der Erfindung:
- Kraftfahrzeuge beliebiger Bauart können umgerüstet werden, da kein Eingriff in die Motor-/ Generatorsteuerung erfolgt.
- Effektive Bremsenergierückgewinnung ohne Beeinflussung der Fahrzeugeigenschaften.

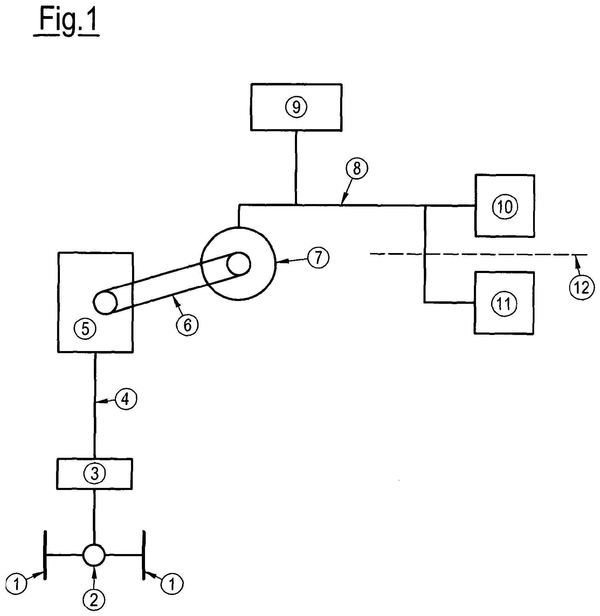

Nachfolgend wird die Erfindung anhand von Figur 1 näher erläutert. In dieser ist eine schematische Darstellung eines Kraftfahrzeuges mit Generator 7 und Fahrzeugbordnetz (Schnittstelle 12) zu sehen.

Das vorhandene Fahrzeugbordnetz wird erfindungsgemäß nicht verändert, es wird lediglich eine Speichereinheit 11 parallel zum Fahrzeugbordnetz in das Bordnetz verschaltet.

Die Speichereinheit 11 besteht aus einer Steuereinheit und einer Energiespeichereinheit. Um die Rekuperationsleistung des Bordnetzes des Kraftfahrzeugs nutzen zu können wird mittels der zweiten Steuereinheit oder Speichersteuereinheit die Bordspannung derart beeinflusst, dass überschüssige Rekuperationsleistung in der Energiespeichereinheit gespeichert und bei Bedarf aus dieser wieder ins Bordnetz abgegeben werden kann.

Das vorhandene Bordnetz wird dabei nicht verändert, sondern nur innerhalb der technisch vorgefundenen Leistungsgrenzen moduliert.

Die Generatorspannung wird im Lastfall, z.B. beim Bremsen, mittelbar durch den fließenden Speicherstrom abgesenkt. Als Reaktion auf diesen Spannungseinbruch erhöht der Lichtmaschinenregler die Generatorerregung, um seine eingestellte Regelspannung wieder zu erreichen. Das Speichersteuergerät regelt den Speicherladestrom auf eine Größe, die das Absenken der Bordspannung auf ein festgelegtes Minimum begrenzt, um die Maximalleistung des Generators oder eine andere wählbare Generatorleistung zu erreichen, ohne eine nennenswerte Batterieentladung herbeizuführen.

Die im Fahrbetrieb auftretenden Energieüberschüsse des Fahrzeuggenerators werden bei jedem verwertbaren Verzögerungsvorgang (und nur in diesem Fall) aus dem Bordnetz in dem Energiespeicher gesammelt und bei nachfolgenden Beschleunigungsvorgängen wieder in das Bordnetz eingespeist.

Beim Verzögern oder Bremsen wird durch die Speichersteuereinheit der Leistungsbedarf erhöht, so dass der Generator im Antriebsstrang 4, eine erhöhte Last darstellt. Die dabei erzeugte Elektroenergie wird als Bremsenergie von der Energiespeichereinheit aufgenommen.

Die Energiespeichereinheit kann ein Kondensator- oder SuperCap-Speicher sein, wobei deren Innenwiderstand um mindestens eine Größenordnung kleiner zu wählen ist, als der Innenwiderstand der Batterie. Damit ist die Speichereinheit in der Lage, bereits mit geringer Absenkung der Bordspannung hohe Rekuperationsleistung vom Bordnetz abzufordern. Dies ist insbesondere möglich, wenn die Speichereinheit elektrisch dicht an den Batterieanschlüssen kontaktiert wird.

Durch das Hochsetzen der Speicherklemmenspannung auf einen Wert oberhalb der aktuellen Bordnetzspannung wird bei allen Betriebszuständen, außerhalb erkannter Verzögerungsvorgänge, die gespeicherte Energie in das Bordnetz eingespeist. Dies geschieht dadurch, dass durch die Spannungserhöhung der Lichtmaschinenregler den Erregerstrom bis auf ein Minimum vermindert, wodurch die Generatorlast im Antriebsstrang 4 reduziert wird.

Damit wird die Leistungsabforderung der Lichtmaschine vom Verbrennungsmotor verringert und dessen momentaner Kraftstoffverbrauch reduziert. Der Betrag, um den die Klemmenspannung erhöht wird, ist wiederum so gewählt, dass keine deutliche Batterieladung erfolgt. Zum Landen der Energiespeichereinheit wird die Klemmenspannung herabgesetzt.

Die Klemmenspannungsänderungswerte werden an das Bordnetz des Kraftfahrzeuges und die Energiespeichereinheit angepasst und können beispielsweise Werte zwischen +- 0,1 V und +- 2V haben.

Es erfolgt somit kein direkter Zugriff des Speichersteuergerätes auf den Generator, sondern es erfolgt lediglich eine mittelbare Beeinflussung des Generators durch die dem Bordnetz aufgeprägten elektrischen Spannungswerte.

Als Datenquelle für die Fahrsituationsbewertung dienen ein oder mehrere Beschleunigungssensoren, die Bestandteil des Steuergerätes der Anordnung sind. Zum eindeutigen Erkennen aktionsrelevanter Fahrzustände werden statische und dynamische Beschleunigungen erfasst, mit denen die Fahrzeuglage im Raum und die Fahrzeugbeschleunigungswerte in Echtzeit bewertet werden. Die Unterscheidung zwischen Gefällefahrt, Fahrbahnanregungen und zu erkennender Bremsverzögerung erfolgt durch Hochpass-, Tiefpass- und Bandpassfilter sowie Plausibilitätsvergleiche.

### Bezugszeichenliste

- 1: Räder
- 2: Achse/Differential
- 3: Getriebe
- 4: Antriebsstrang
- 5: Verbrennungsmotor
- 6: Riementrieb
- 7: Generator
- 8: Bordnetz
- 9: Bordverbraucher
- 10: Fahrzeugbatterie
- 11: Speichereinheit
- 12: Schnittstelle zum Fahrzeug

## Patentansprüche

1. Verfahren zur Nutzung von Rekuperationsleistung eines Bordnetzes (8) in einem Kraftfahrzeug, wobei das Bordnetz (8) einen Generator (7), der von einer Antriebseinheit (5) angetrieben wird, eine Batterie (10), ein erste Steuereinheit und mehrere angeschlossene Verbraucher (9) sowie eine parallel zur Batterie (10) geschaltete Energiespeichereinheit (11) umfasst, wobei der Generator (7) mittels der ersten Steuereinheit derart geregelt wird, dass der Ladestatus der Batterie (10) innerhalb vorgebbarer Grenzen und die Bordnetzspannung weitgehend konstant gehalten wird, **gekennzeichnet durch** die Schritte:
Vorsehen einer zweiten Steuereinheit,
Beeinflussung der Bordspannung durch die zweite Steuereinheit derart, daß überschüssige Rekuperationsleistung in der Energiespeichereinheit (11) gespeichert und bei Bedarf aus dieser wieder ins Bordnetz (8) abgegeben wird,
Betreiben der zweiten Steuereinheit unabhängig von der ersten Steuereinheit, und
Zuschalten der Energiespeichereinheit (11) durch die zweite Steuereinheit als semiaktive Last in das Bordnetz (8).

2. Verfahren nach Anspruch 1, **gekennzeichnet durch** Regeln der Bordspannung durch gezieltes Modulieren der Klemmenspannung durch die zweite Steuereinheit.

3. Verfahren nach einem der Ansprüche 1 - 2, **gekennzeichnet durch** Vorsehen einer Steuerlogik in der zweiten Steuereinheit, die ein virtuelles Abbild der Fahrsituation erzeugt, indem statische und dynamische Beschleunigungssignale gefiltert und bewertet werden und diese Daten den Speicherlade- und Speicherentladevorgang steuern.

4. Verfahren nach Anspruch 3, **gekennzeichnet durch** Erfassen von Beschleunigungen des Kraftfahrzeugs durch die Steuereinheit mittels Beschleunigungssensoren.

5. Verfahren nach Anspruch 3, **gekennzeichnet durch**
Auswerten der Lage im Raum und die dynamischen Fahrzeugbeschleunigungswerte in Echtzeit durch die zweite Steuereinheit, und,
Bewertung der Fahrsituation mittels Hochpass-, Tiefpass- und Bandpassfilter sowie Plausibilitätsvergleich daraus.

6. Verfahren nach Anspruch 4, **gekennzeichnet durch**
Ausbilden der Steuerlogik als ein selbst lernendes System.

7. Speichereinheit zur Nutzung von Rekuperationsleistung eines Bordnetzes (8) in einem Kraftfahrzeug, wobei das Bordnetz (8) einen Generator (7), der von einer Antriebseinheit (5) antreibbar ist, eine Batterie (10), ein Steuereinheit und mehrere angeschlossene Verbraucher (9), sowie eine parallel zur Batterie (10) geschaltete Energiespeichereinheit (11) umfasst, wobei der Generator (7) mittels der Steuereinheit derart regelbar ist, dass der Ladestatus der Batterie (10) innerhalb vorgebbarer Grenzen und die Bordnetzspannung weitgehend konstant gehalten werden kann,
**dadurch gekennzeichnet,**
**dass** eine zweite Steuereinheit vorhanden ist, wobei mittels der zweiten Steuereinheit die Bordspannung derart beeinflussbar ist, dass überschüssige Rekupertionsleistung in der Energiespeichereinheit (11) speicherbar ist und bei Bedarf aus dieser wieder ins Bordnetz (8) abgebbar ist, und wobei die zweite Steuereinheit derart ausgebildet ist, dass sie unabhängig von der ersten Steuereinheit arbeitet und die Energiespeichereinheit (11) als semiaktive Last in das Bordnetz (8) zuschaltet.

8. Speichereinheit nach Anspruch 7,
**dadurch gekennzeichnet,**
**dass** die zweite Steuereinheit und die Energiespeichereinheit (11) eine Einheit sind, die über einen zweipoligen Anschluss an einer beliebigen Stelle in das Bordnetz (8) geschaltet werden kann.

9. Speichereinheit nach Anspruch 8,
**dadurch gekennzeichnet,**
**dass** die Einheit unmittelbar, bzw. elektrisch dicht, an den Generatoranschlüssen angeschlossen ist.

10. Speichereinheit nach einem der Ansprüche 7 bis 9,
**dadurch gekennzeichnet,**
**dass** die Energiespeichereinheit (11) ein Kondensator- oder SuperCapspeicher ist, deren Innenwiderstand um mindestens eine Größenordnung kleiner ist als der Innenwiderstand der Batterie (10).

11. Speichereinheit nach einem der Ansprüche 7 bis 10,
**dadurch gekennzeichnet,**
**dass** Energiespeichereinheit (11) eine Leistung von 5 - 200 Wh hat.

12. Speichereinheit nach einem der Ansprüche 7 bis 9,
**dadurch gekennzeichnet,**
**dass** die zweite Steuereinheit einen Beschleunigungssensor und eine Steuerlogik umfasst.

13. Speichereinheit nach Anspruch 10,
**dadurch gekennzeichnet,**
**dass** der Beschleunigungssensor ein Ein- oder Mehrlagenbeschleunigungssensor ist.

14. Kraftfahrzeug umfassend eine Speichereinheit zur Nutzung von Rekuperationsleistung nach einem der Ansprüche 7 bis 13.

## Claims

1. Method for using recuperation power of an on-board electrical system (8) in a motor vehicle, wherein the on-board electrical system (8) comprises a generator (7), which is driven by a drive unit (5), a battery (10), a first control unit and a plurality of connected loads (9) and an energy storage unit (11) connected in parallel with the battery (10), wherein the generator (7) is regulated by means of the first control unit in such a way that the charge status of the battery (10) is kept within prescribable limits and the on-board electrical system voltage is kept substantially constant,
**characterized by** the following steps:
provision of a second control unit,
influencing of the on-board voltage by the second control unit in such a way that excess recuperation power is stored in the energy storage unit (11) and is delivered from said energy storage unit back into the on-board electrical system (8) as required,
operation of the second control unit independently of the first control unit, and
connection of the energy storage unit (11) as a semi-active load to the on-board electrical system (8) by the second control unit.

2. Method according to Claim 1, **characterized by** regulation of the on-board voltage by targeted modulation of the terminal voltage by the second control unit.

3. Method according to either of Claims 1-2, **characterized by**
provision of a control logic unit in the second control unit, said control logic unit generating a virtual image of the driving situation by virtue of static and dynamic acceleration signals being filtered and assessed and these data controlling the storage charging and storage discharging process.

4. Method according to Claim 3, **characterized by** detection of accelerations of the motor vehicle by the control unit by means of acceleration sensors.

5. Method according to Claim 3, **characterized by** evaluation of the position in space and the dynamic vehicle acceleration values in real time by the second control unit, and
assessment of the driving situation by means of highpass, low-pass and band-pass filters and plausibility comparison thereof.

6. Method according to Claim 4, **characterized by** configuration of the control logic unit as a self-learning system.

7. Storage unit for using recuperation power of an on-board electrical system (8) in a motor vehicle, wherein the on-board electrical system (8) comprises a generator (7), which can be driven by a drive unit (5), a battery (10), a control unit and a plurality of connected loads (9) and an energy storage unit (11) connected in parallel with the battery (10), wherein the generator (7) can be regulated by means of the control unit in such a way that the charge status of the battery (10) can be kept within prescribable limits and the on-board electrical system voltage can be kept substantially constant,
**characterized in that**
a second control unit is present, wherein the on-board voltage can be influenced by means of the second control unit in such a way that excess recuperation power can be stored in the energy storage unit (11) and can be delivered from said energy storage unit back into the on-board electrical system (8) as required, and wherein the second control unit is configured in such a way that it operates independently of the first control unit and connects the energy storage unit (11) as a semi-active load to the on-board electrical system (8) .

8. Storage unit according to Claim 7, **characterized in that** the second control unit and the energy storage unit (11) are one unit, which can be connected to the on-board electrical system (8) at any location by way of a two-pole connection.

9. Storage unit according to Claim 8, **characterized in that** the unit is connected directly, or in an electrically tight manner, to the generator connections.

10. Storage unit according to one of Claims 7 to 9, **characterized in that** the energy storage unit (11) is a capacitor or a supercapacitor, the internal resistance of which is lower than the internal resistance of the battery (10) by at least one order of magnitude.

11. Storage unit according to one of Claims 7 to 10, **characterized in that** energy storage unit (11) has a power of 5-200 Wh.

12. Storage unit according to one of Claims 7 to 9, **characterized in that** the second control unit comprises an acceleration sensor and a control logic unit.

13. Storage unit according to Claim 10, **characterized in that** the acceleration sensor is a single-layer or a multi-layer acceleration sensor.

14. Motor vehicle comprising a storage unit for using recuperation power according to one of Claims 7 to 13.

## Revendications

1. Procédé pour utiliser la puissance de récupération d'un réseau de bord (8) dans un véhicule automobile, le réseau de bord (8) comportant un générateur (7), qui est entraîné par une unité d'entraînement (5), une batterie (10), une unité de commande et plusieurs consommateurs (9) raccordés ainsi qu'une unité d'accumulation d'énergie (11) branchée en parallèle avec la batterie (10), le générateur (7) étant régulé au moyen de la première unité de commande de telle sorte que l'état de charge de la batterie (10) est maintenu à l'intérieur de limites pouvant être prédéfinies et la tension du réseau de bord largement constante,
**caractérisé par** les étapes suivantes :
fourniture d'une deuxième unité de commande,
influence de la tension de bord par la deuxième unité de commande de telle sorte que la puissance de récupération en surplus est accumulée dans l'unité d'accumulation d'énergie (11) et est de nouveau délivrée de celle-ci dans le réseau de bord (8) en cas de besoin,
mise en fonctionnement de la deuxième unité de commande indépendamment de la première unité de commande et
mise en circuit de l'unité d'accumulation d'énergie (11) par la deuxième unité de commande en tant que charge semi-active dans le réseau de bord (8).

2. Procédé selon la revendication 1, **caractérisé par** la régulation de la tension de bord par modulation ciblée de la tension de borne par la deuxième unité de commande.

3. Procédé selon l'une des revendications 1 à 2, **caractérisé par** la fourniture d'une logique de commande dans la deuxième unité de commande, laquelle génère une représentation virtuelle de la situation de conduite en ce que des signaux d'accélération statiques et dynamiques sont filtrés et ces données commandent l'opération de charge de l'accumulateur et de décharge de l'accumulateur.

4. Procédé selon la revendication 3, **caractérisé par** la détection d'accélérations du véhicule automobile par l'unité de commande au moyen de capteurs d'accélération.

5. Procédé selon la revendication 3, **caractérisé par** l'interprétation de la position dans l'espace et des valeurs dynamiques de l'accélération du véhicule en temps réel par la deuxième unité de commande et l'évaluation de la situation de conduite au moyen de filtres passe-haut, passe-bas et passe-bande ainsi que d'une comparaison de plausibilité à partir de cela.

6. Procédé selon la revendication 4, **caractérisé par** la configuration de la logique de commande sous la forme d'un système à auto-apprentissage.

7. Unité d'accumulation pour utiliser la puissance de récupération d'un réseau de bord (8) dans un véhicule automobile, le réseau de bord (8) comportant un générateur (7), qui peut être entraîné par une unité d'entraînement (5), une batterie (10), une unité de commande et plusieurs consommateurs (9) raccordés, ainsi qu'une unité d'accumulation d'énergie (11) branchée en parallèle avec la batterie (10), le générateur (7) pouvant être régulé au moyen de l'unité de commande de telle sorte que l'état de charge de la batterie (10) peut être maintenu à l'intérieur de limites pouvant être prédéfinies et la tension du réseau de bord largement constante,
**caractérisée en ce**
**qu'**une deuxième unité de commande est présente, la tension de bord pouvant être influencée au moyen de la deuxième unité de commande de telle sorte que la puissance de récupération en surplus peut être accumulée dans l'unité d'accumulation d'énergie (11) et peut de nouveau être délivrée de celle-ci dans le réseau de bord (8) en cas de besoin, et la deuxième unité de commande étant configurée de telle sorte qu'elle fonctionne indépendamment de la première unité de commande et met en circuit l'unité d'accumulation d'énergie (11) en tant que charge semi-active dans le réseau de bord (8).

8. Unité d'accumulation selon la revendication 7, **caractérisée en ce que** la deuxième unité de commande et l'unité d'accumulation d'énergie (11) sont une unité qui peut être connectée par le biais d'un raccordement bipolaire à un endroit quelconque dans le réseau de bord (8).

9. Unité d'accumulation selon la revendication 8, **caractérisée en ce que** l'unité est raccordée directement ou de manière électriquement hermétique aux bornes du générateur.

10. Unité d'accumulation selon l'une des revendications 7 à 9, **caractérisée en ce que** l'unité d'accumulation d'énergie (11) est un accumulateur à condensateur ou à supercondensateur dont la résistance interne est inférieure d'au moins un ordre de grandeur à la résistance interne de la batterie (10).

11. Unité d'accumulation selon l'une des revendications 7 à 10, **caractérisée en ce qu'**unité d'accumulation d'énergie (11) a une puissance de 5 à 200 Wh.

12. Unité d'accumulation selon l'une des revendications 7 à 9, **caractérisée en ce que** la deuxième unité de commande comporte un capteur d'accélération ou une logique de commande.

13. Unité d'accumulation selon la revendication 10, **caractérisée en ce que** le capteur d'accélération est un capteur d'accélération monocouche ou multicouche.

14. Véhicule automobile comprenant une unité d'accumulation pour utiliser la puissance de récupération selon l'une des revendications 7 à 13.
